## Europäisches Patentamt
## European Patent Office
## Office européen des brevets

(11) Publication number: **0 202 579**
**B1**

# EUROPEAN PATENT SPECIFICATION

(45) Date of publication of patent specification: **01.08.90**

(21) Application number: **86106467.3**

(22) Date of filing: **13.05.86**

(51) Int. Cl.⁵: **H 02 M 7/02, H 05 B 6/66,**
**H 01 J 23/34, H 05 G 1/10**

(54) **Power feed apparatus for load having reverse blocking characteristics.**

(30) Priority: **14.05.85 JP 101848/85**

(43) Date of publication of application:
**26.11.86 Bulletin 86/48**

(45) Publication of the grant of the patent:
**01.08.90 Bulletin 90/31**

(84) Designated Contracting States:
**DE FR GB IT NL SE**

(56) References cited:
**DE-A-2 100 548**
**DE-A-2 546 261**
**DE-A-2 756 617**
**GB-A-1 471 200**
**US-A-3 474 343**
**US-A-3 925 672**
**US-A-4 126 784**
**US-A-4 318 165**

(73) Proprietor: **Matsushita Electric Industrial Co.,
Ltd.
1006, Oaza Kadoma
Kadoma-shi Osaka-fu, 571 (JP)**

(72) Inventor: **Maehara, Naoyoshi
385-75, Yao, Tawaramoto-cho
Shiki-gun Nara-ken (JP)**
Inventor: **Matsumoto, Takahiro
3-8-9, Awa, Ikaruga-cho
Ikoma-gun Nara-ken (JP)**
Inventor: **Kusunoki, Shigeru
89-4, Yatayama-cho
Yamatokoriyama-shi Nara-ken (JP)**
Inventor: **Sakamoto, Kazuho
24, Kitadani, Umedani Kizu-cho
Soraku-gun Kyoto-fu (JP)**
Inventor: **Mihara, Makoto
1-4-10, Higashinakamoto Higashinari-ku
Osaka-shi Osaka-fu (JP)**

(74) Representative: **Eisenführ, Speiser & Strasse
Martinistrasse 24
D-2800 Bremen 1 (DE)**

Courier Press, Leamington Spa, England.

## Description

The invention relates to a power supply for feeding a load having a reverse blocking characteristic, particularly a magnetron of a dielectric heater, comprising a transformer with a primary and a secondary winding, the secondary winding being directly connected to the load, and by-pass means connected parallel to the load.

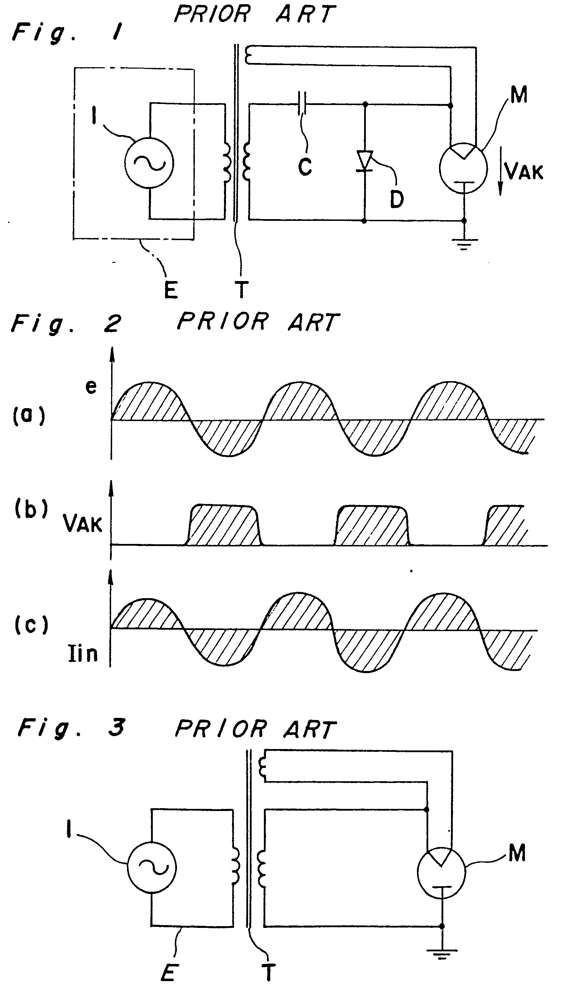

Figure 1 is a circuit diagram of a conventional magnetron power supply apparatus, as for instance known from DE—A—25 46 261. In the drawing, the output of the power supply E provided by a commercial power supply 1 or the like is adapted to be boosted by a boosting transformer T, to be rectified by a capacitor C and a diode D and to be fed to a magnetron M. Accordingly, the waveform $V_{AK}$ of the voltage to be fed to the magnetron M which is a load having a reverse blocking characteristics is shown in Figure 2(b) with respect to the power supply voltage waveform shown in Figure 2(a). The input current I from the power supply E continuously flows as shown in Figure 2(c). The transformer T and the power supply E stably operate without causing any inconvenience even if the load has a reverse blocking characteristics.

However, the diode D is of high cost because of the requirement of the high withstand-voltage capability and further is easy to be broken by excessive surge voltages or the like of the magnetron M. As rectification of the high-frequency is required to be performed at the high voltage especially when the power supply E is a high-frequency power supply, it is difficult to provide a diode of sufficient capability and at reasonable price.

When a power feed apparatus of a type where the capacitor C and diode D of Figure 1 are omitted is required to be realized as in Figure 3, such inconvenience as described hereinabove is caused so as to make it difficult to realize the apparatus.

Namely, in the case of the apparatus of Figure 1, the track on the B-H curve of the transformer T is O→a→b→c→d→a, in the case of an apparatus of Figure 3, it is O→a→b→a as shown in Figure 4, thus causing the so-called deviated magnetism phenomenon, with the result that the transformer becomes extremely inferior in efficiency, and the influences are worse on the operation of the power supply E.

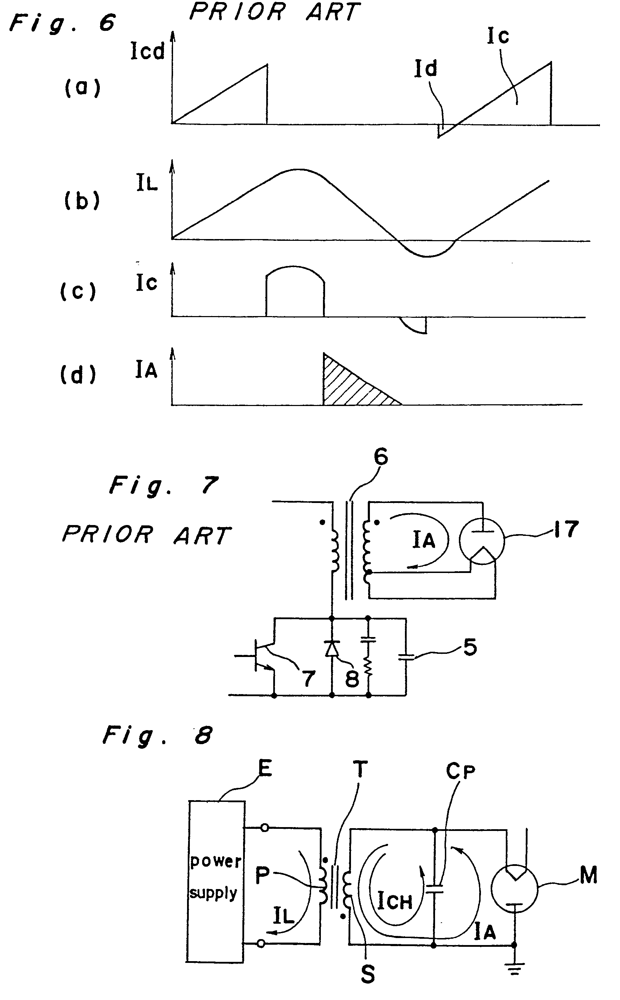

From this background, an art of using a high-frequency inverter power supply of a fly-back type for the power supply E is proposed as in Figure 5. Figure 5 is a circuit diagram of another conventional power feed apparatus, and is power-supply circuit diagram of a high-frequency heating apparatus described in US—A—4,318,165.

In the drawing, the power of the commercial power supply is rectified by a diode bridge 2, thus forming a unilateral power supply. An inductor 3 and a capacitor 4 play a part of a filter with respect to the high-frequency switching operation of an inverter.

The inverter is composed of a resonance capacitor 5, a boosting transformer 6, a transistor 7, a diode 8 and a driving circuit 9. The transistor 7 is performed in switching with a given period and duty (namely, on, off time ratio) by the base current to be supplied from the driving circuit 9. As a result, a current Icd with such a collector current Ic and a diode current Id as shown in Figure 6(a) being a center flows to the primary winding 10 of the boosting transformer, and such a high-frequency current $I_L$ as shown in Figure 6(b) flows the primary winding 10. Thus, the high-frequency high-voltage power and the high-frequency low-voltage power are caused respectively in the second winding 11 and the third winding 12 of the boosting transformer. The high-frequency low-voltage power is fed between the cathode terminals of the magnetron 17 (through the capacitors 13, 14 and the choke coils 15, 16); while the high-frequency high-voltage power is fed as shown between the anode and the cathode. And such currents as shown in Figure 6(c), (d) respectively flow to the capacitor 5 and the magnetron 17 so that the magnetron 17 is oscillated to perform dielectric heating.

Such a construction as described hereinabove has characteristics that the weight and size of the boosting transformer may have only several tenth as compared with a circuit working at commercial power-supply frequency. If the transistor 7 is operated with the frequency of approximately 20 kHz through 100 kHz, the power-supply portion may be made smaller in size, lower in cost.

Particularly, the high-frequency heating apparatus shown in the specification of US—A—4,318,165 is constructed as a so-called fly-back type converter circuit in which the polarities of the primary winding 10 and the secondary winding 11 of the boosting transformer 6 are shown, so that the magnetron can be driven without the use of the high-voltage diode to be normally used for the high-voltage rectification, thus realizing such a high-frequency as shown in Figure 5.

Accordingly, as the high-voltage high-frequency diode which is obliged to be extremely higher at price and larger in size becomes unnecessary, the higher-frequency heating apparatus is realized smaller, lighter, cost-lower.

However, such a conventional high-frequency heating apparatus as described hereinabove has the following disadvantage. A converter of this type is described in detail in a document by L. E. Jansson "Converter Circuits for Switched-mode Power Supplies" Electronics Applications Bulletin, Vol. 32, No. 3, N. V. Philips (1973). There are a fly-back system and a forward system as a converter using one transistor. It is known that the fly-back system of converter is often used in the high-voltage producing circuit for television use, because it has the least number of components, and may be constructed lower at price.

However, in the case of handling the large power as in the energy appliance, the characteristics are considerably reduced. At page 86 through page 87 of the document it is described in detail that the addition of the various components is required to provide the output of, for example, approximately 200 W or more in a fly-back system, the component becomes complicated and the price becomes higher. Also, although it is desirable to construct the leakage inductance of the transformer as zero especially in a fly-back converter, it is difficult to realize it, so that important influences are applied upon the semiconductor switch element such as transistor or the like. As this influence becomes important as the power of handling the converter becomes larger, a protective apparatus which is bothersome and large is required to protect the transistor from the influence. It is not proper to apply the converter of the fly-back system for the high-frequency heating apparatus handling the high power (for example, approximately 1 through 2 kW).

On the other hand, when the output of the boosting transformer 6 is connected directly to the magnetron 17, the polarity of the transformer is one of the converter of the forward system as shown in Figure 7, such inconvenience as described in Figure 3 is caused, the so-called deviated magnetism phenomenon is caused to make the operation of the converter unstable.

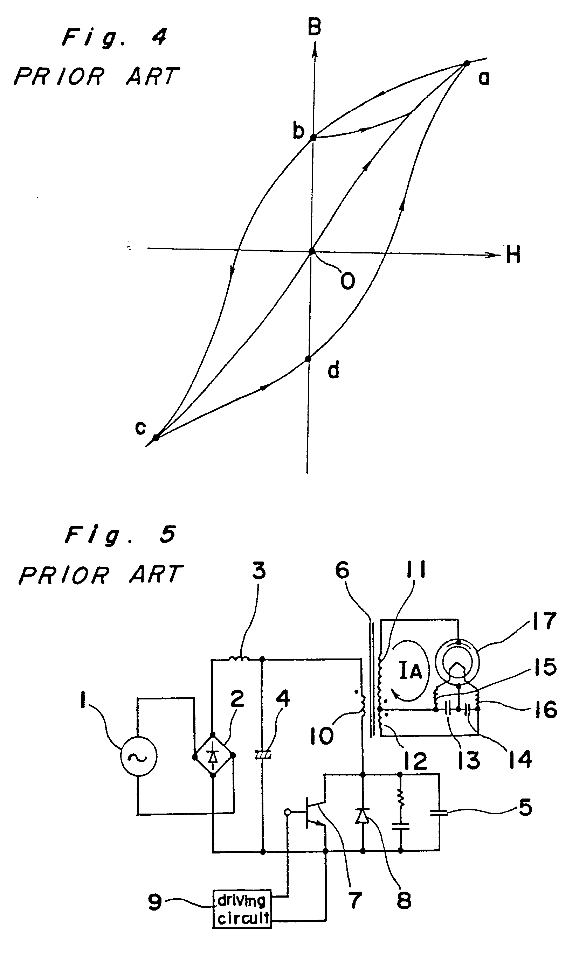

Namely, as shown in Figure 4, the operation track on the B-H curve of the boosting voltage transformer 6 does not become the operation track of the normal transformer of the O→a→b→c→d→a, but the track of the O→a→b→a, where the efficiency becomes extremely inferior and the deviated magnetism phenomenon is likely to be caused. Accordingly, it is extremely difficult to feed the power in the construction where the diode is omitted to the magnetron having the reverse blocking characteristics by the forward system of converter.

Furthermore, the anode current 1A of the magnetron 17 is obliged to become the current waveform large in peak value as shown in Figure 6(d). This is because of the so-called fly-back type converter form, wherein the energy accumulated in the primary winding 10 for a period the transistor 7 is conductive is discharged to the magnetron 17 through the secondary winding 11 for a non-conductive period. Also, as the current flows to the magnetron 7 only during the non-conductive period of the transistor 7, the peak value of the anode current $I_A$ is obliged to become much larger to provide the given average current for getting the given radio wave output.

Thus, the emission capability of the cathode of the magnetron 17 has to be enlarged, so that the magnetron 17 becomes higher in price. Also, when the finishing peak value of the anode current $I_A$ is large, the abnormal oscillation phenomenon, so-called moding phenomenon, in the frequencies except for the given frequency in the relation with respect to the emission capacity surplus is likely to be produced, thus considerably shortening the life time of the magnetron, also as the frequencies are ones except for the given frequency, there are inconveniences where the wave leakage amount of the high-frequency heating apparatus increase to limit the lower price of the high-frequency heating apparatus or to lower the reliability.

It is an object of the present invention to avoid the disadvantages of the conventional power supplies, and to provide a power supply for feeding a load having a reverse blocking characteristic, particularly a magnetron of a dielectric heater, which provides a stable operation of the power supply in connection with such a load, to improve the reliability at lower costs.

The power supply as defined above, according to the invention is characterized by an inductance connected in series with the load, and where the by-pass means consists of a capacitance.

Preferable embodiments are defined in the dependent claims.

These and other objects and features of the present invention will become apparent from the following description taken in conjunction with the preferred embodiment thereof with reference to the accompanying drawings, in which:

Figure 1 is a circuit diagram of the conventional power feed apparatus (already referred to);

Figures 2(a), (b) and (c) are operating voltage current waveform charts, relating to the circuit of Figure 1;

Figure 3 is a circuit diagram of another power feed apparatus modifying the circuit of Figure 1;

Figure 4 is a B-H curve graph of the transformers of apparatuses of Figures 1 and 3;

Figure 5 is a circuit diagram of the other conventional power feed apparatus using a fly-back converter;

Figures 6(a) through (d) are the operating voltage current waveform charts of the apparatus of Figure 5;

Figure 7 is a circuit diagram for illustrating the defects of the apparatus of Figure 5;

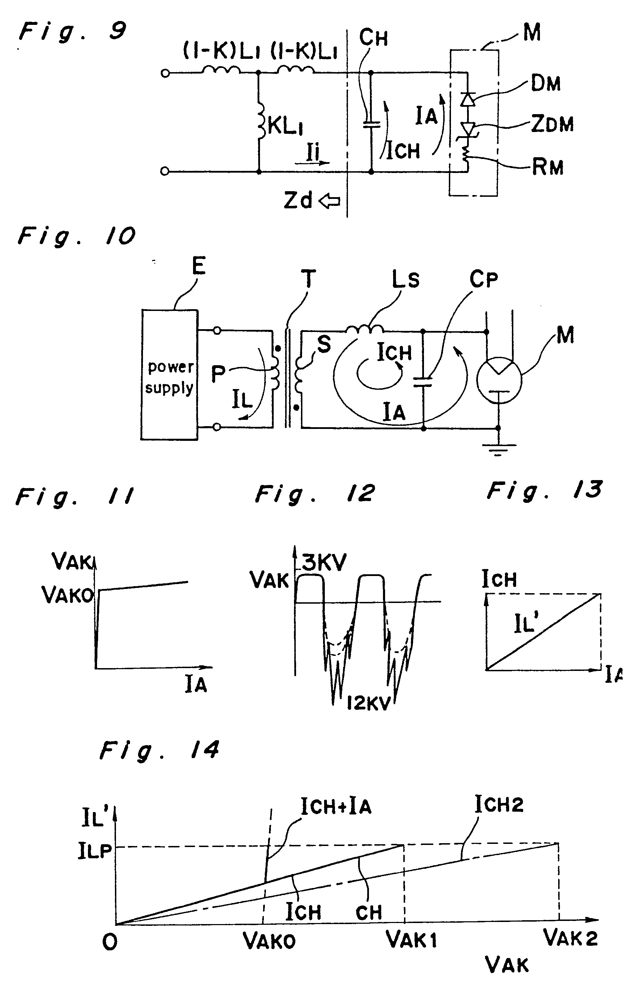

Figure 8 is a circuit diagram of a power feed apparatus showing a first embodiment of the present invention;

Figure 9 is a primary-side equivalent circuit diagram of the apparatus of Figure 8;

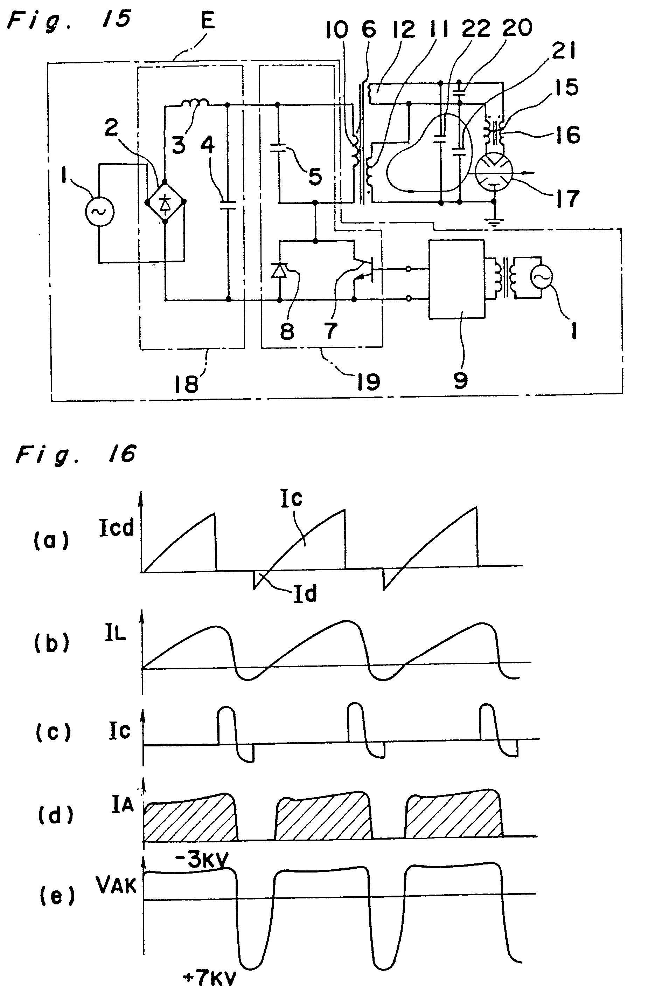

Figure 10 is a circuit diagram of a power feed apparatus showing a second embodiment of the present invention;

Figure 11 is a voltage current characteristic chart of a magnetron employed in the apparatus of Figure 8;

Figure 12 is an anode voltage waveform chart of the magnetron for illustrating the operation of the power feed apparatus of the present invention;

Figure 13 is a vector chart of the anode current $I_A$ of the magnetron, and of the capacitor current $I_{CH}$ for illustrating the operation of the power feed apparatus of the present invention;

Figure 14 is a chart for illustrating the operation of the high-voltage capacitor of the power feed apparatus of the present invention;

Figure 15 is a circuit diagram of a power feed apparatus showing a third embodiment of the present invention using a forward converter; and

Figures 16(a) through 16(e) are the operating voltage current waveform charts of the apparatus of Figure 15.

Detailed description of the invention

Before the description of the present invention proceeds, it is to be noted that like parts are designated by like reference numerals throughout the accompanying drawings.

Referring now to the drawings, there is shown a power feed apparatus for properly feeding power to a load, which has the reverse blocking characteristics such as magnetron or the like. The embodiments of the present invention will be described, which has been applied to a high-frequency heating apparatus for heating the food stuffs with the magnetron as load.

In Figure 8 showing a first embodiment of the present invention, a power supply E feeds primary current $I_L$ to a boosting transformer T. The power converted by the transformer T is adapted to be supplied to the magnetron M which is a load having the reverse blocking characteristics. As the transformer T is a so-called leakage type transformer, which is constructed to be smaller (for example, approximately 0.6 through 0.8) in the degree of coupling between the primary and secondary windings P, S, when the normal transformer as described later, the operation is performed with the leakage inductance being inserted into the flow path of an anode current $I_A$ flowing to the magnetron M. On the other hand, a capacitor $C_P$ is connected in parallel to the magnetron M, thus forming a by-path route with respect to the magnetron M. Accordingly, even in the polarity where the magnetron M is reversely biased, the secondary current $I_{CH}$ flows to the transformer T to prevent the core of the transformer T from being deviated in magnetism, and to prevent the open condition of the secondary winding S from being caused so that the abnormal voltage such as spike voltage, resonance voltage through the suspension capacity of the secondary winding or the like may be prevented from being caused.

Figure 9 is a primary-side equivalent circuit of the circuit of Figure 8, wherein L1 is the self-inductance of the primary winding P, and K is the coupling coefficient of the primary winding P and the secondary winding S. The magnetron M may be replaced by a series circuit of a resistor RM, a diode DM, a zenner diode ZDM, and a capacitor CH is connected in parallel to the series circuit. The characteristics of the magnetron M are extremely non-linear as shown in Figure 11, the dynamic impedance is extremely small. The leakage of the transformer T is made larger to make the leakage inductance (I-K) L1 larger than that of the conventional normal transformer, so that the impedance Zd, seen from the second side of the transformer T is made higher to provide the transformer with the constant-current source quality. Thus, it is possible to stabilize the operation of the magnetron M or the power supply E.

Figure 10 is a circuit diagram showing a second embodiment of the present invention. It is to be noted that like parts in Figure 1 are designated by like reference numerals to omit the detailed description.

In Figure 10, the boosting transformer T is one having the coupling degree K which is the same in degree as the normal transformer, the degree is K=approximately 0.9 through 1.0. Accordingly, the sufficiently large inductance element cannot be inserted into the flow path of the current $I_A$ of the magnetron M only with the leakage inductance, so that the series inductor $L_S$ has been inserted.

The operation and effect which are the same as in Figure 8 may be provided through this construction. And the capacitor Cp, when the magnetron M is in the polarity to be reversely biased, prevents such abnormal high voltage as shown in Figure 12, which is caused in the secondary winding S with the suspension capacity or the like so as to perform an operation of controlling the reverse voltage to such a relative low value, as shown in a broken like in Figure 12. Accordingly, as the withstand pressure of the transformer T or the magnetron M may be relatively lower, the manufacturing operation may be lower at price.

Furthermore, the high-voltage in the reverse bias of the above-described magnetron M may be controlled to a lower value by the proper choice of the capacitor Cp.

As shown in Figure 13, there is the phase difference of 90° between the current $I_A$ of the magnetron M and the current $I_{CH}$ of the capacitor Cp. Accordingly, the current $I_L$ flowing to the transformer T becomes these composite current in the sequential bias of the magnetron M, while it becomes equal to the current $I_{CH}$ of the capacitor Cp in the reverse bias. Figure 14 is a chart for illustrating this as a model. In the drawing, the current $I_L$ equivalent to flow into the secondary winding S of the transformer T changes from O to $I_{LP}$ (only in the absolute value) in the positive, negative both-polarity voltage. This is because the transformer is considered an ideal constant-current source.

Suppose the capacitor Cp has a certain capacity value. In the sequential bias of the magnetron M, the operation point goes as far as VAKO on $I_{CH}$ shown in a solid line of the drawing from O and goes as far as $I_L=I_{LP}$ on the line $I_{CH}+I_A$, as soon as the current $I_A$ flows, to return to O. Then, in the reverse bias of the magnetron M, the operation point goes on the $I_{CH}$ shown in the solid line of the drawing from O as far as $I_L=I_{LP}$ and returns. Accordingly, the voltage VAK (transformer secondary voltage) of the magnetron M becomes VAK=VAK1. Suppose the capacity value of the capacitor Cp is smaller and the flowing current becomes $I_{CH2}$ showing one-dot chain line. Accordingly, the voltage VAK of the magnetron M in the reverse bias becomes VAK=VAK2>VAK1. As the capacity value of the capacitor Cp is larger, the voltage VAK of the magnetron M may be made smaller. However, the capacity value of the capacitor Cp is excessively larger, thus giving bad influences to the power supply E. The capacitor Cp is required to be a capacity value of the proper range. As apparent from Figure 14, the impedance is desired to become one from the approximate impedance of the magnetron M to ten times as much or lower.

Figure 15 is a block diagram of a power feed apparatus showing a third embodiment of the present invention. This is an example where an inverter 19 is used in the power supply E, the same reference characters are given to the same component elements as those in the conventional example of Figure 5 to omit the detailed description.

Referring to Figure 15, the power of the commercial power supply 1 is sent to a DC power supply 18 and is fed to the inverter 19. The inverter 19 is composed of a semiconductive switch and so on made of a transistor 7. The inverter is adapted to feed the high-voltage power to the magnetron 17 through the urging operation of the boosting transformer 6. And, currents flowing to the transistor 17 respectively become as in Figure 16(a), (b), (c) and (d). Namely, the current $I_{cd}$ with the collector current Ic and the diode current Id as the center flows, as in Figure 16(a), to the primary winding of the boosting transformer 6. And, such a high-frequency current $I_A$, as shown in Figure 16(b), flows to the primary winding 10. Such a current $I_C$, as shown in Figure 16(c), flows to the resonance capacitor 5, and such an anode current $I_A$, as shown in Figure 16(d), to the magnetron 17. The anode voltage of the magnetron 17 becomes as shown in Figure 16(e). This is because the polarities of the primary winding 10 and the secondary winding 11 of the boosting transformer 6 are provided as shown, the boosting transformer 6 is a leakage type transformer as illustrated in Figure 8, and, furthermore, the high-voltage capacitors 21, 22 are connected in parallel to the magnetron 17 to form a by-pass route for by-passing the reverse bias current of the magnetron.

Also, the anode current IA is of a trapezoidal waveform which does not have the sharp peak as shown in Figure 16(d) by the provision of the leakage inductance and a capacitor CH to prevent the cathode from being deteriorated and the moding from being caused so as to realize a power feed apparatus which is safe and high in reliability.

Also, the high-voltage capacitor Cp in Figure 8 serves as a filter capacitor of the magnetron 17 in Figure 15, and is the first and second high-voltage capacitors 21 and 22. A capacitor 20 is provided between the cathode terminals of the magnetron 17, and the choke coils 15, 16 are wound in the form of bifilar around the same core. Accordingly, the function of the high-voltage capacitor Cp in Figure 3 is performed in the composite capacity of both the high-voltage capacitors 21, 22. As the high voltage may be fed to the magnetron from potential difference between both the terminals of the cathode is reduced, when the magnetron is driven by the high-frequency voltage, to promote the stable oscillation of the magnetron, thus providing an effect of controlling the production of the high frequency. Furthermore, as the high-frequency current may be shunted to the voltage capacitors 21, 22, the heating of the high-voltage capacitors 21, 22 may be controlled to realize the lower price, the higher realization. Also, the high-voltage capacitors 21, 22 are composed of an integral through capacitor and may serve as a capacitor 20, furthermore may be easily built in integrally with the magnetron 17. Accordingly, the high-voltage capacitor group may be rendered more compact in shape, lower in price, the unrequired radiation of the magnetron may be easily performed.

As is clear from the foregoing description, according to the arrangement of the present invention, the effects are as follows.

(1) An apparatus for feeding the power to the load of the large power having reverse blocking characteristics is provided without causing the deviated magnetic phenomenon of the transformer or the abnormal high voltage, and in the circuit construction free from the rectifier. The apparatus may be realized which is lower in cost, higher in reliability, and more compact in shape.

(2) Also, as the power-supply impedance seen from the load may be increased, the suppressing operation of the rush current with respect to the load having the non-linear reserve blocking characteristics may be exhibited. The operation stability of the power supply or the load may be guaranteed, thus increasing the safety, reliability.

(3) Furthermore, in the case of the power supply including the inverter, converter and so on, a forward type converter suitable for the large-power load may be applied. The power feed apparatus which is lower in cost, higher in reliability, and more compact in shape may be provided because of the absence of the high-voltage diode. The reverse bias current by-pass means is composed of a capacitor to realize the low-pass filter operation through the combination with the inductance element. The high-frequency component of the feed power to the load having the reverse blocking charactersitics may be controlled. Accordingly, a power feed apparatus which is more stabilized in the operation of the load and the power supply may be provided.

## Claims

1. A power supply for feeding a load having a reverse blocking characteristic, particularly a magnetron of a dielectric heater, comprising a transformer with a primary and a secondary winding, the secondary winding being directly connected to the load, and by-pass means connected parallel to the load, characterized by an inductance (Ls) connected in series with the load (M, 17), and where the by-pass means consists of a capacitance (Cp; 21, 22).

2. A power supply according to claim 1, characterized in that the transformer (T, 6) is a leakage type transformer and that the inductance (Ls) is provided by the leakage inductance of the transformer.

3. A power supply according to claim 1 or 2, characterized in that the capacitor (Cp; 21, 22) is dimensioned such that the current flowing to the capacitor is approximately equal to the current flowing to the load (M, 17).

4. A power supply as claimed in any of claims 1 to 3, characterized by a semiconductor power converter (1, 9, 19) feeding the transformer (6).

5. A power supply as claimed in claim 4, characterized in that the semiconductor power converter (1, 9, 19) is a forward type converter.

6. A power supply as claimed in any of claims 1 to 5, in which the load is a magnetron, characterized in that at least a part of the capacitor (Cp) is used as a capacitor for preventing unwanted radiation of the magnetron.

7. A power supply as claimed in claim 6, characterized in that the capacitor (Cp) for preventing unwanted radiation is integrally mounted on the magnetron.

**Patentansprüche**

1. Stromversorgung zum Speisen einer Last mit Sperrverhalten in einer Richtung, insbesondere eines Magnetrons einer dielektrischen Heizvorrichtung, mit einem eine Primärwicklung und eine Sekundärwicklung aufweisenden Transformator, dessen Sekundärwicklung direkt an die Last angeschlossen ist, die durch Bypass-Mittel überbrückt ist, dadurch gekennzeichnet, daß in Serie mit der Last (M, 17) eine Induktivität (Ls) geschaltet ist, und die Bypass-Mittel aus einer Kapazität (Cp; 21, 22) besteht.

2. Stromversorgung nach Anspruch 1, dadurch gekennzeichnet, daß der Transformator (T, 6) ein Streutransformator ist und die Induktivität (Ls) durch die Streuinduktivität des Transformators gebildet wird.

3. Stromversorgung nach Anspruch 1 oder 2, dadurch gekennzeichnet, daß die Kapazität (Cp; 21, 22) derart dimensioniert ist, daß der durch diese Kapazität fließende Strom etwa gleich dem durch die Last (M, 17) fließenden Strom ist.

4. Stromversorgung nach einem der Ansprüche 1 bis 3, gekennzeichnet durch einen Halbleiter-Stromrichter (1, 9, 19) zur Speisung des Transformators (6).

5. Stromversorgung nach Anspruch 4, dadurch gekennzeichnet, daß der Halbleiter-Stromrichter (1, 9, 19) ein Durchfluß-Konverter ist.

6. Stromversorgung nach einem der Ansprüche 1 bis 5 für ein Magnetron als Last, dadurch gekennzeichnet, daß zumindest ein Teil der Kapazität (Cp) dazu benutzt wird, unerwünschte Strahlung des Magnetrons zu verhindern.

7. Stromversorgung nach Anspruch 6, dadurch gekennzeichnet, daß die Kapazität (Cp) zur Verhinderung der unerwünschten Strahlung in das Magnetron integriert ist.

**Revendications**

1. Source d'alimentation destinée à alimenter une charge possédant une caractéristique de blocage inverse, en particulier un magnétron d'un élément de chauffage diélectrique, comportant un transformateur avec un enroulement primaire et un enroulement secondaire, l'enroulement secondaire étant connecté directement à la charge et un dispositif de dérivation étant connecté en parallèle sur la charge, caractérisée en ce qu'elle comporte une bobine d'inductance (Ls) connectée en série avec la charge (M, 17) et dans laquelle le dispositif de dérivation consiste en un condensateur (Cp; 21, 22).

2. Source d'alimentation selon la revendication 1, caractérisée en ce que le transformateur (T, 6) est un transformateur du type à fuite et en ce que la bobine d'inductance (Ls) est constituée par l'inductance de fuite du transformateur.

3. Source d'alimentation selon la revendication 1 ou 2, caractérisée en ce que le condensateur (Cp; 21, 22) est dimensionné de manière que le courant qui y circule soit à peu près égal au courant qui circule dans la charge (M, 17).

4. Source d'alimentation selon l'une quelconque des revendications 1 à 3, caractérisée en ce qu'elle comporte un convertisseur de puissance à semi-conducteur (1, 9, 19) qui alimente le transformateur (6).

5. Source d'alimentation selon la revendication 4, caractérisée en ce que le convertisseur de puissance à semi-conducteur (1, 9, 19) est un convertisseur du type direct.

6. Source d'alimentation selon l'une quelconque des revendications 1 à 5, dans laquelle la charge est un magnétron, caractérisée en ce qu'au moins une partie du condensateur (Cp) est utilisée comme un condensateur pour éviter un rayonnement indésirable du magnétron.

7. Source d'alimentation selon la revendication 6, caractérisée en ce que le condensateur (Cp) qui évite un rayonnement indésirable est monté solidairement du magnétron.

*Fig. 1* PRIOR ART

*Fig. 2* PRIOR ART

(a)

(b) V$_{AK}$

(c) I$_{in}$

*Fig. 3* PRIOR ART

Fig. 4
PRIOR ART

Fig. 5
PRIOR ART

**Fig. 6**    PRIOR ART

(a)

(b)

(c)

(d)

**Fig. 7**

PRIOR ART

**Fig. 8**

Fig. 9

(I-K)L₁ (I-K)L₁ CH M

KL₁

DM

ZDM

RM

Ii

ICH

IA

Zd ⇐

Fig. 10

E T LS CP

power supply P S ICH M

IL IA

Fig. 11

VAK

VAKO

IA

Fig. 12

VAK 3KV

I2KV

Fig. 13

ICH

IL'

IA

Fig. 14

IL'

ICH+IA ICH2

ILP

ICH CH

O VAKO VAK1 VAK2

VAK

*Fig. 15*

*Fig. 16*